(19) Europäisches Patentamt / European Patent Office / Office européen des brevets

(11) **EP 3 389 021 B1**

(12) **EUROPEAN PATENT SPECIFICATION**

(45) Date of publication and mention
of the grant of the patent:
**11.08.2021  Bulletin 2021/32**

(51) Int Cl.:
*G07C 5/08* *(2006.01)*          *B63B 79/10* *(2020.01)*
*G01C 21/20* *(2006.01)*        *G05D 1/08* *(2006.01)*

(21) Application number: **17166050.9**

(22) Date of filing: **11.04.2017**

(54) **INDICATOR METHOD AND SYSTEM FOR A VESSEL**

ANZEIGERVERFAHREN UND -SYSTEM FÜR EIN SCHIFF

SYSTÈME ET PROCÉDÉ INDICATEUR POUR UN NAVIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.10.2018  Bulletin 2018/42**

(73) Proprietor: **Damen Components Holding B.V.
2931 AD Krimpen aan de Lek (NL)**

(72) Inventors:
• **van Buren, Edwin Simon
2935 VC Ouderkerk a/d IJssel (NL)**
• **De Jong, Markus
2923 GH Krimpen aan den Ijssel (NL)**

(74) Representative: **Nederlandsch Octrooibureau
P.O. Box 29720
2502 LS The Hague (NL)**

(56) References cited:
EP-A1- 2 993 116          WO-A1-2010/031399
WO-A1-2016/110693      CN-A- 106 557 088
KR-A- 20160 065 229

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The invention relates to a method and a system for monitoring an efficiency for a vessel, and to a vessel provided with such a system. Furthermore, the invention relates to a computer program product arranged to perform the proposed method, and to a computer readable medium comprising such a computer program.

## Background Art

Control assistance display methods and systems for marine vessels are known. Such display methods and systems serve to provide helpful information to a human operator of the vessel (e.g. a helmsman), which allows this operator to make better decisions with regard to setting and adjustment of vessel controls.

Patent document US4129087A describes a display system for assisting a human operator in manually controlling a ship. This display system comprises a computer that is configured to calculate an optimum rudder angle and to show the calculated rudder angle and an actual rudder angle on a display. An ordered rudder angle produced by the helm wheel and a gyrocompass heading are used by the computer to determine an optimum rudder angle, which is shown to the operator via a pursuit-type rotating ring display. Legend indicators show the human operator when the helm wheel is correctly or incorrectly positioned, as well as the direction in which to move.

The information content based on gyrocompass heading and rudder angles presented by this known display system to the vessel operator is rather limited. Waterway navigation based on set gyrocompass headings is less suitable in waterways with limited size and/or wherein significant vessel manoeuvring can be expected, e.g. during inland waterway navigation. In these settings, a rudder angle guidance indicator based on gyrocompass heading is of little use to the vessel operator.

Patent document WO2010/031399A1 describes a sensor system for dynamically optimizing the operation of a ship, using a statistical state model of the ship to optimize the ship's fuel efficiency based on the ship's control variables. This system measures mean rudder angle and calculates standard deviation values for the rudder angle.

Patent document EP2993116A1 describes a sensor device for affixing to the hull of a marine vessel and measuring a plurality of kinematic parameters for the vessel to derive marine vessel performance data.

Patent document KR20160065229A describes an energy management system and method for calculating an integrated energy efficiency index for a marine vessel.

Patent document WO2016/110693A1 describes a system for monitoring energy usage of a surface maritime vessel, based on sensed vessel operation parameters.

It would be desirable to provide an assistive indicator method and system that allow a vessel operator to make better informed decisions regarding steering adjustments, and which may allow generation of additional visual information regarding the vessel's dynamic behaviour in a clear and readily accessible manner.

## Summary of Invention

Therefore, according to a first aspect of the invention, there is provided a method for monitoring an efficiency of a vessel during waterway navigation as defined in claim 1. The method comprises obtaining an efficiency indication $SEI_i$ corresponding to a time interval $\Delta t_i$, and providing the efficiency indication to a display device. Obtaining of the efficiency indication includes:

- acquiring an indication of a fuel consumption $FC_i$ by the vessel in the time interval;
- acquiring an indication of a distance $D_i$ travelled by the vessel in the time interval;
- acquiring an indication of fluctuation of a rudder angle (RA) during at least the time interval, and
- calculating the efficiency indication based on the indication of the fuel consumption, the indication of the distance, and the indication of fluctuation of the rudder angle.

Calculation of the efficiency indication involves dynamic adjustment of this efficiency indication to an improved value if the indication of rudder angle fluctuation corresponds to sufficiently stable rudder behaviour.

The ship efficiency indicator may provide a vessel operator an increased awareness of the vessel's dynamic behaviour in relation to fuel efficiency, and of the impact of excess rudder fluctuations on this fuel efficiency. By also considering rudder angle fluctuations, the efficiency indication provides current information on optimal steering behaviour, not only when sailing straight ahead but also through curves (e.g. in bends of a river). Indicator-assisted fine-tuning of steering helps in reducing the number and magnitude of steering motions, which may in turn lead to desired reductions in fuel consumption and associated $CO_2$ emissions by the propulsion system, and/or wear of the steering mechanism.

The time interval $\Delta t_i$ relates to a recent point in time and a finite period that directly precedes it. The recent point in time is preferably the current time, but slight delays in the order of seconds or less may be inherently present e.g. due to processing lag and/or synchronization issues. The travelled distance and the fuel consumption are determined over this time interval, and are therefore "local" observables representative of recent/current vessel dynamics, which can be dynamically updated at desired update rates. Preferably, the indication of fluctuation of the rudder angle is acquired over a reference time interval that also relates to the current point in time, but which extends over a longer reference time length $\Delta t_a$ back in time. Criteria for defining rudder angle fluctuation can thus be decoupled from the update rate of the efficiency indication, especially in cases where short SEI update rates are desired.

According to an embodiment, the obtaining of the efficiency indication $SEI_i$ also includes acquiring an indication of fluctuation of a rate of turn (ROT) of the vessel during at least the time interval $\Delta t_i$, and calculating of the efficiency indication is also based on the indication of fluctuation of the rate of turn.

Calculation of the efficiency indication may for instance involve dynamic adjustment of this efficiency indication to an improved value if both the indication of rudder angle and turning rate fluctuations correspond to sufficiently stable steering behaviour.

The turning rate of the vessel directly depends on the rudder angle, but also on inertial effects. Short-lived rudder angle fluctuations do to not necessarily cause substantial changes in ROT, and a current ROT will only converge towards a desired ROT (and associated rudder angle) after a certain response time. The efficiency indication for the operator may therefore also consider the effect of fluctuations in the vessel turning rate on the fuel efficiency. Preferably, the indication of fluctuation of ROT is acquired over a reference time interval that also relates to the recent point in time, but which extends over the longer reference time length $\Delta t_a$ back in time. The criteria for defining turning rate fluctuation can thus also be decoupled from the update rate of the efficiency indication.

In the method according to the first aspect, calculation of the efficiency indication includes:

- comparing the indication of fluctuation of rudder angle against a first threshold value, and
- adjusting the efficiency indication to an improved value if the indication of fluctuation of the rudder angle remains below the first threshold.

By comparing rudder angle fluctuations against a threshold value and improving the efficiency indication if fluctuations are deemed small, the operator can be dynamically made aware that gradual rudder motions are preferred over erratic rudder corrections while navigating a curve. The fluctuation tolerance may be set beforehand. The rudder angle may for instance be deemed (quasi) constant if the rudder angle fluctuations stay within first fluctuation threshold during the reference time length $\Delta t_a$ that is at least as long as the time interval $\Delta t_i$ over which the fuel consumption and travelled distance are determined. Each pair of rudder angles measured at consecutive times may be mutually compared, to assess whether one or more of the resulting differential values exceeds the first fluctuation threshold. Alternatively or in addition, other numerical or statistical approaches may be employed to assess the magnitude of fluctuations.

In an alternative embodiment, calculation of the efficiency indication includes:

- comparing the indication of fluctuation of the rudder angle against a first threshold value;
- comparing the indication of fluctuation of the rate of turn against a second threshold value, and
- adjusting the efficiency indication to an improved value only if both the indications of fluctuations of the rudder angle and the rate of turn remain below the respective first and second threshold values.

By comparing both rudder angle and vessel turning rate fluctuations against threshold values and improving the efficiency indication only if both fluctuations remain sufficiently low, the operator can be made aware that gradual rudder motions are preferred only when they contribute to a desired constant turning rate for navigating a curve. The fluctuation tolerances may be set beforehand, and may be different for turning rate and rudder angle. The tolerances may be made dependent on current speed over ground measurements. The tolerances ensure that the ship efficiency indicator is not affected by relatively small fluctuations, which may for example be caused by non-controllable circumstances like local water turbulence close to the rudder.

Similarly, the turning rate may be deemed (quasi) constant if the turning rate fluctuations stay within second fluctuation threshold during reference time length $\Delta t_a$ that is at least as long as the time interval $\Delta t_i$. Each pair of ROT values measured at consecutive times may be mutually compared to assess whether one or more of the resulting differential values exceeds the second fluctuation threshold, but other numerical or statistical approaches may be used as an addition or an alternative to the above.

The method according to the first aspect further comprises:

- initially determining a reference efficiency term $EEOI_r$;
- calculating a current efficiency term $EEOI_i$ based on the indication of the fuel consumption and the indication of the distance acquired for the time interval $\Delta t_i$;

Here, calculation of the efficiency indication $SEI_i$ includes determining a ratio between the reference efficiency term and the current efficiency term.

The current efficiency term may be calculated based on real-time measured fuel consumption rate and travelled distance. In this way, the ship efficiency indicator provides real-time information, with a resolution determined by the chosen time interval $\Delta t_i$. The current efficiency term may for example include a ratio between the fuel consumption and the travelled distance. It may for instance via be calculated via $EEOI_i = FC_i / (Mc \cdot D)$, Mc being a factor related to an (absolute or relative) mass of the cargo carried by the vessel. The reference efficiency term EEOI$_r$ is a pre-determined reference energy term, which may be a copy of the value used in the preceding time interval $\Delta t_{i-1}$. EEOI$_r$ may be initially estimated. The efficiency indication may for example include a ratio between the reference energy term and the current efficiency term, and may for instance be calculated via SEI$_i$ = 100% · EEOI$_r$ / EEOI$_i$.

In the method according to the first aspect, the adjusting of the efficiency indication comprises:

- maintaining the reference efficiency term EEOI$_r$, if the indication of fluctuation of the rudder angle equals or exceeds the first threshold value, and
- overwriting the reference efficiency term with the current efficiency term EEOI$_i$, if the indication of fluctuation of the rudder angle remains below the first threshold value.

The reference efficiency term may overwritten if the rudder angle is deemed stable, in which case the reference value is replaced by the current efficiency term. The efficiency indication thus assumes a new optimal value, when the vessel navigates straight ahead or traverses a curve with stable rudder behaviour. Subsequent efficiency terms will be compared against the latest stable efficiency term, to allow dynamic presentation of efficiency indications that are related to recent low-fuel consumption situations, even in curves.

According to an alternative further embodiment, the adjusting of the efficiency indication (SEI$_i$) comprises:

- maintaining the reference efficiency term EEOI$_r$, if at least one of the indications of fluctuations of the rudder angle and the rate of turn equals or exceeds its respective first or second threshold value, and
- overwriting the reference efficiency term with the current efficiency term EEOI$_i$, if both the indications of fluctuations of the rudder angle and the rate of turn remain below the respective first and second threshold values.

The vessel turning rate typically changes in response to a changing rudder angle, but the response delay depends on inertial effects and other factors. In this embodiment, the reference efficiency term will be overwritten if and only if both the turning rate and rudder angle are deemed stable. The efficiency indication then assumes a new optimal value when the vessel navigates straight ahead or traverses a curve with a stable rudder angle and a stabilized vessel turning rate.

In further embodiments, the method may additionally include a step in which the current efficiency term EEOI$_i$ is first set as the new reference efficiency term EEOI$_r$ in the case that EEOI$_i$ < EEOI$_r$, in order to set the current efficiency indication SEI$_i$ to 100%.

According to an embodiment, acquiring of the indication of the distance travelled by the vessel in the time interval $\Delta t_i$ comprises:

- acquiring consecutive measurements of a speed over ground (SOG) of a hull of the vessel with respect to ground during the time interval, and
- integrating the measurements of the speed over ground to calculate the distance travelled by the vessel in the time interval.

The travelled distance may be determined from the speed over ground of the vessel. Numerical integration techniques may be used, e.g. based on averaged SOG values and time sub-intervals. The speed over ground can be measured using a Global Navigation Satellite System (GNSS) receiver present on the vessel.

According to an embodiment, the method comprises:

- measuring an indication of draught of the vessel, and
- calculating a cargo mass percentage Mc from the indication of draught.

The (absolute or relative) cargo load of the vessel may be taken into account, to compare efficiency terms between distinct trips of a vessel or between different vessels. An indication of the draught may be measured and be included in the calculation of the current efficiency term. For instance, calculation of the current efficiency term may be based on the draught of the vessel, in addition to fuel consumption and travelled distance. Alternative method embodiments may rely on actual cargo mass (instead of draught), which may be measured directly or determined in advance via known procedures.

According to an embodiment, the method comprises displaying at least the efficiency indication SEI$_i$ at a bridge of the vessel. A graphical or tabulated representation of historical SEI values may be simultaneously displayed. Other parameters that may be displayed to the bridge may be (but are not limited to) the current speed over ground, fuel consumption rate, $CO_2$ emission rate, rudder angle, and/or vessel turning rate.

According to a second aspect, and with advantages and effects described herein above with reference to the first aspect, there is provided a system for monitoring an efficiency of a vessel during waterway navigation as defined in claim 7. The system comprises a sensor arrangement and a processor device which are jointly configured to execute the method in accordance with the first aspect.

According to this second aspect, the system comprises a first sensor, a second sensor, and a third sensor. The first sensor is configured to measure a fuel consumption rate of a propulsion system of the vessel, in order to acquire an indication of a fuel consumption by the vessel in time interval $\Delta t_i$. The second sensor is configured to measure a speed of the vessel, in order to acquire an indication of a distance travelled by the vessel in the time interval. The third sensor is configured to measure a pivot angle of a rudder blade relative to a hull of the vessel, in order to acquire an indication of fluctuation of a rudder angle during at least the time interval. The processor device is configured to calculate an efficiency indication $SEI_i$ corresponding to the time interval, based on the indication of the fuel consumption, the indication of the distance, and the indication of fluctuation of the rudder angle.

According to an embodiment, the system further comprises a fourth sensor, which is configured to measure a ROT of the hull of the vessel, in order to acquire an indication of fluctuation of a rate of turn during at least the time interval $\Delta t_i$.

The first, second, third, and fourth sensors are preferably configured to repeatedly (e.g. continuously or intermittently) measure the respective indications.

The system comprises a display device, which is configured to dynamically display the efficiency indication $SEI_i$ corresponding to the time interval $\Delta t_i$ to a vessel operator.

According to a third aspect, and with advantages and effects described herein above with reference to the first and second aspects, there is provided a marine vessel comprising a system in accordance with the second aspect.

In a fourth aspect of the invention, there is provided a computer program product configured to provide instructions to carry out a method according to the first aspect, when loaded on a computer device.

In a fifth aspect, there is provided a computer readable medium, comprising a computer program product according to the fourth aspect.

## Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labelled as "20a" and "20b". The reference number may be used without an appended letter (e.g. "20") to generally refer to an unspecified instance or to all instances of that element, while the reference number will include an appended letter (e.g. "20a") to refer to a specific instance of the element.

Figures 1a and 1b schematically show side and top views of a vessel according to an embodiment;
Figure 2 schematically presents a system model according to an embodiment;
Figures 3a and 3b show schematic flow diagrams of a method for calculating a ship efficiency indication according to an embodiment, and

Figure 4 shows a graphical user interface according to an embodiment.

The figures are meant for illustrative purposes only, and do not serve as restriction of the scope or the protection as laid down by the claims.

## Description of Embodiments

The following is a description of certain embodiments of the invention, given by way of example only and with reference to the figures. Cartesian coordinates will be used to describe spatial relations for exemplary embodiments.

Reference symbol X is used to indicate a longitudinal direction, which corresponds to the elongated direction of the vessel hull. Prepositions "front" and "rear" pertain to this longitudinal direction X. The "for" or "forward" direction +X extends towards the bow of the vessel. The "aft" direction -X extends towards the stern of the vessel. Reference symbol Y is used to indicate a lateral direction that is perpendicular to the longitudinal direction X. This lateral direction Y generally relates to the terms "left" and "right". The lateral direction Y relates to the athwartship directions ("aport" i.e. towards the port side +Y of the vessel, and "astarboard" means towards the starboard side -Y). Reference symbol Z is used to indicate a vertical direction that is perpendicular to X and Y. Prepositions "above" and "below" pertain to the vertical direction Z.

It should be understood that the directional definitions and preferred orientations presented herein merely serve to elucidate geometrical relations for specific embodiments. The concepts of the invention discussed herein are not limited to these directional definitions and preferred orientations.

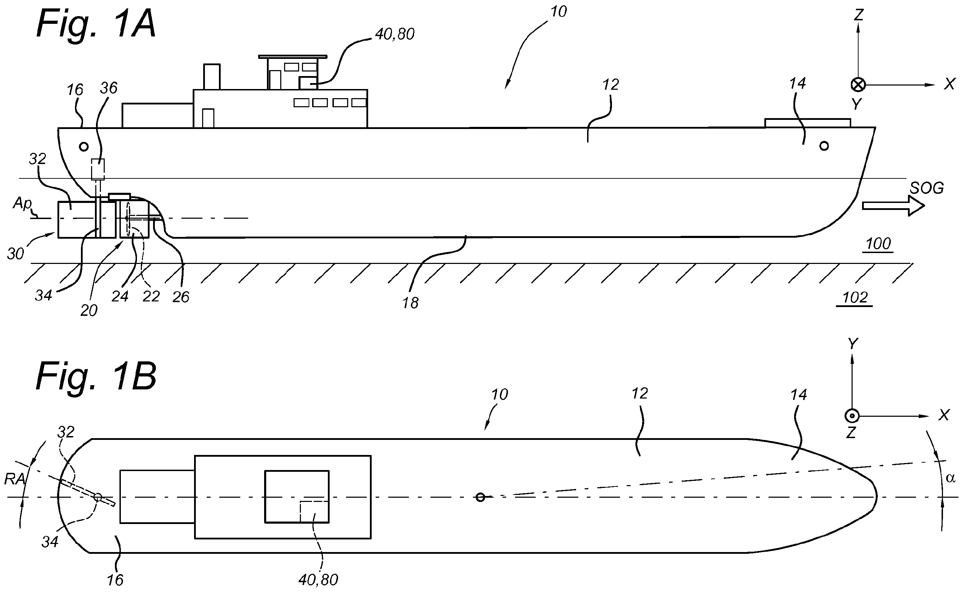

Figures 1a and 1b schematically show a vessel 10, which in this exemplary embodiment forms a cargo ship for inland waterway navigation. Figure 1a shows a side view of the vessel 10 and figure 1b shows a top view of the vessel 10. The vessel 10 comprises a hull 12 with an elongated shape along the longitudinal direction X, which corresponds to the (main) propulsion direction of the vessel 10. The hull 12 defines a bow 14 in a forward direction +X, a stern 16 in an aft direction -X, and a keel 18 on a lower side of the hull 12.

On a lower side of the stern 16, the hull 12 accommodates a propulsion system 20 and a rudder system 30, which may be formed in various ways known in the art. In this example, the propulsion system 20 comprises a propeller 22, a propeller shaft 26, and a nozzle 24. The propeller 22 is fixed to the propeller shaft 26 to form a body that is rotatably coupled to the hull 12. The propeller 22 is rotatable with respect to the hull 12 about a nominal propeller axis Ap, to generate hydrodynamic propulsion forces. The nozzle 24 forms a non-rotating annular shell that surrounds the propeller 22 in a radial direction centred on the propeller axis Ap. Different propulsion systems may be employed in other vessel embodiments. Such propulsion systems may for example comprise more propellers, different propeller geometries, different nozzle geometries, or omit any nozzle.

The rudder system 30 is employed to provide steering capability to the vessel 10. The rudder system 30, comprises a rudder blade 32, a rudderstock 34, and a steering actuator 36. The rudder blade 32 is pivotably coupled to the hull 12 via the rudderstock 34. The rudder blade 32 is directly attached to the rudderstock 34, which extends at one distal end inside the rudder blade 32, where it is mechanically fixed to the rudder blade 32. This rudderstock 34 forms a rigid shaft that extends along a nominal rudder axis Ar, which in this embodiment is directed predominantly along the vertical direction Z. The rudderstock 34 is directly surrounded in a radial direction by a rudder trunk (not indicated), which forms a watertight enclosure around an upper portion of the rudderstock 34.

The rudder blade 32 has a hydrodynamic profile. The rudderstock 34 and rudder blade 32 are jointly pivotable with respect to the hull 12 abound the rudder axis Ar, to generate hydrodynamic pressure differentials between two sides of the rudder blade 32. Typically, the predominant direction of motion for ordinary vessels corresponds with a keel line of the hull 12. The rudder blade 32 has an elongated shape that extends along a nominal rudder plane. The orientation of this rudder plane with respect to the keel line defines a rudder pivot angle (or "rudder angle") RA, as shown in figure 1b.

The rudderstock 34 is coupled to the steering actuator 36 on another end. The steering actuator 36 can be operated to pass steering torques from the steering actuator 36 (e.g. generated by a servo-mechanism) via the rudderstock 34 on to the rudder blade 32. Different rudder systems may be employed in other vessel embodiments. Such rudder systems may for example comprise multiple rudders and/or different rudder geometries, for example (semi-) balanced rudders, flaps rudders, etc.

A steering torque exerted on the rudder blade 32 will cause the rudder angle RA to change, which in turn will cause a change in the hydrodynamic pressure differential between the sides of the rudder blade. The resulting lift force, which is proportional to the rudder angle RA, exerts a torque on the vessel 10 as a whole and causes the vessel 10 to turn in the water. The steering forces correlate with the angle of incidence of the rudder blade 32 with respect to the propulsion direction, as well as with the propulsion speed of the vessel 10 with respect to the water. The turning behaviour of the vessel may be quantified by a turning rate (or "rate of turn" ROT), which may be approximated by a relative change of a turning angle $\Delta\alpha$ with respect to ground per time increment $\Delta t$ i.e. $ROT \approx \Delta\alpha/\Delta t$.

The human operator controls the vessel 10 directly, typically by means of steering controls (e.g. a steering handle) and propulsion controls, which are typically located on the bridge of the vessel 10. Steering signals from the steering controls are transmitted to the steering actuator 36, to control the rudder blade 32 and adjust the rudder angle RA.

The vessel 10 further comprises an efficiency monitoring system 40. Measured indications of fuel consumption FC, travelled distance D, fluctuations in rudder angles RA, and possibly also in turning rates ROT, may be used by the monitoring system 40 to dynamically calculate ship efficiency indications (SEI). The SEI values are to be displayed on a display device 80, to inform the human operator of the impact of current steering and propulsion behaviour on current fuel efficiency.

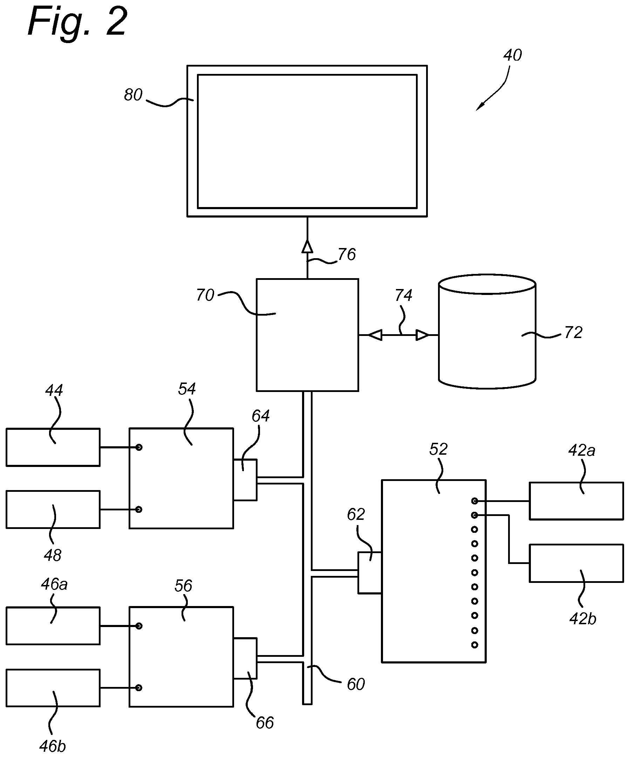

Figure 2 shows a simplified block diagram of components and communication lines in the exemplary monitoring system 40 from figures 1a-b. The monitoring system 40 comprises a plurality of sensors 42, 44, 46, 48, a plurality of functional sub-systems 52, 54, 56, a data bus 60, a central processor 70, a data memory 72, and a display device 80.

The sensors 42-48 are adapted to measure a plurality of real time input parameters, which relate to a dynamic state of the vessel 10 during operation. In this case, the measuring parameters comprise a rudder angle RA, a vessel rate of turn ROT, a vessel speed with respect to ground SOG, and an instantaneous fuel consumption rate FC. The sensors 42-48 and system 40 are configured to sample and acquire data in an automated manner, without requiring human interaction.

The monitoring system 40 comprises at least one fuel consumption sensor 42, which is configured to provide indications proportional to instantaneous volume transport of fuel per unit time through the corresponding fuel supply line. In vessel embodiments wherein the propulsion system 20 includes multiple engines and propellers 22, the monitoring system 40 may comprise a fuel consumption sensor 42 for each engine/propeller pair, as schematically indicated by elements 42a and 42b in figure 2. The fuel consumption sensors 42 may for example be implemented by flow sensors located in respective fuel supply lines of the vessel's propulsion system 20.

The monitoring system 40 comprises a GNSS positioning device 44, which is configured to determine an instantaneous position of the vessel 10 with respect to an earth global coordinate system, via reception and processing of radio signals from a constellation of GNSS satellites. Temporal dynamics of the position information from the GNSS positioning device 44 are used to derive a (near) instantaneous speed of the vessel 10 with respect to ground SOG(t).

The monitoring system 40 comprises rudder angle sensors 46a, 46b, which are adapted for measuring individual instantaneous rudder angles RAa(t) and RAb(t) for each rudder blade 32a-32b of the vessel 10 (expressed in degrees).

The monitoring system 40 also comprises a turning rate sensor 48, which is adapted for measuring an indication of the instantaneous rate of turn ROT(t) for the vessel 10 (expressed in degrees per second). This turning rate sensor 48 may for example involve differential measurements by means of an internal gyroscope (which may be based on mechanical, MEMS, fibre optic, solid state ring laser, or other operating principles), possibly supplemented by position measurement from the GNSS positioning device 44.

The sensors 42-48 are connected to corresponding sub-systems 52, 54, 56, via respective communication lines. Each of the subsystems 52-56 may be formed as a distinct functional unit with electronic circuitry provided on a dedicated printed circuit board, and configured to operate independently of and simultaneously with the other subsystems. Analogue measurement values may be intermittently retrieved from the individual sensors 42-48 by the corresponding sub-systems 52-56. In this embodiment, measurements from the sensors 42-48 are received by the respective subsystems 52-56 through existing data interfaces (for example serial RS485 interfaces). Communications between the sensors 42-48 and the corresponding sub-systems 52-56 may proceed according to protocols implemented in the respective sensors 42-48.

Raw data measured by the sensors 42-48 may be pre-processed in the respective sub-system 52-56, before being transmitted to the central processor 70. Such pre-processing of measurement data may comprise error detection and handling, down sampling, outlier rejection, statistical processing (e.g. averaging) and the like. For example, in this exemplary vessel 10 with two propeller systems 22 and fuel consumption sensors 42a-b, the first subsystem 52 may be configured to integrate over measurements from the fuel sensors 42a-b, to provide a combined fuel consumption rate for a specific time interval. Similarly, the third sub-system 56 may be configured to repeatedly calculate an average for each synchronous pair of rudder angles RAa(t) and RAb(t) from rudder angle sensors 46a-b, to obtain a single average rudder angle RA(t) at each measurement time t. The second sub-system 54 may be configured to execute preprocessing functions on measurements received from the GNSS positioning device 44 and the turning rate sensor 48. When pre-processing of the data received from the sensors 42-48 has been carried out by the sub-systems 52-56, the data are forwarded as messages via the data bus 60 to central processor 70.

The central processor 70 includes a microprocessor unit, which is configured to process data input received from subsystems 52-56. The central processor 70 is communicatively coupled to a data memory unit 72 (e.g. a solid state hard drive or SD memory unit), which provides persistent data storage. The data memory 72 may be used for storage of current and historical measurement data, intermittent calculation results, a set of historical indicator values, and/or calculated statistics in relation to the aforementioned information.

The central processor 70 is in signal communication with display device 80 via communication link 76. The central processor 70 calculates (and possibly updates) indictor data for display by display device 80. The central processor 70 and display device 80 (and possibly also the data memory 72) may be integrated into a single device, for instance a panel pc. This is not required, though.

In this example, data inputs for calculating the ship efficiency indication SEI comprise rudder angle RA, vessel turning rate ROT, fuel consumption rate FC, and speed of the vessel 10 with respect to ground SOG.

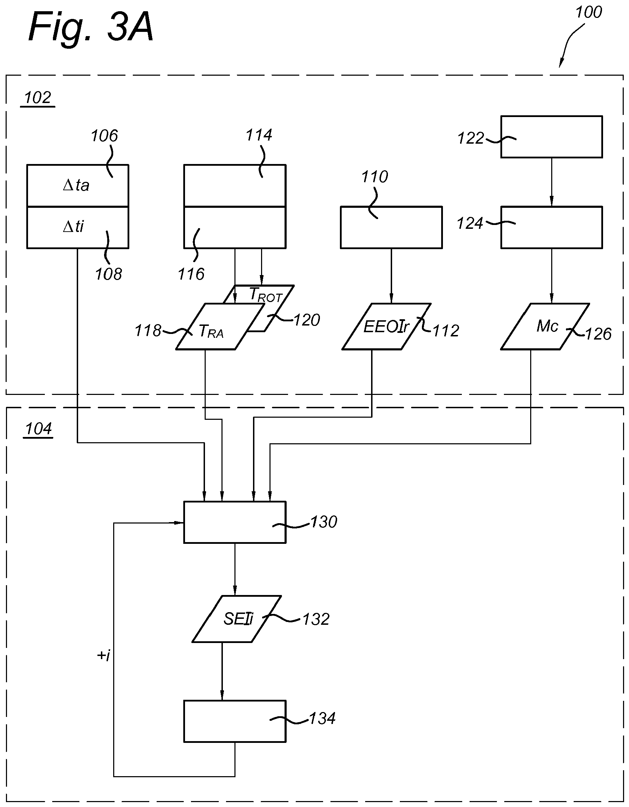

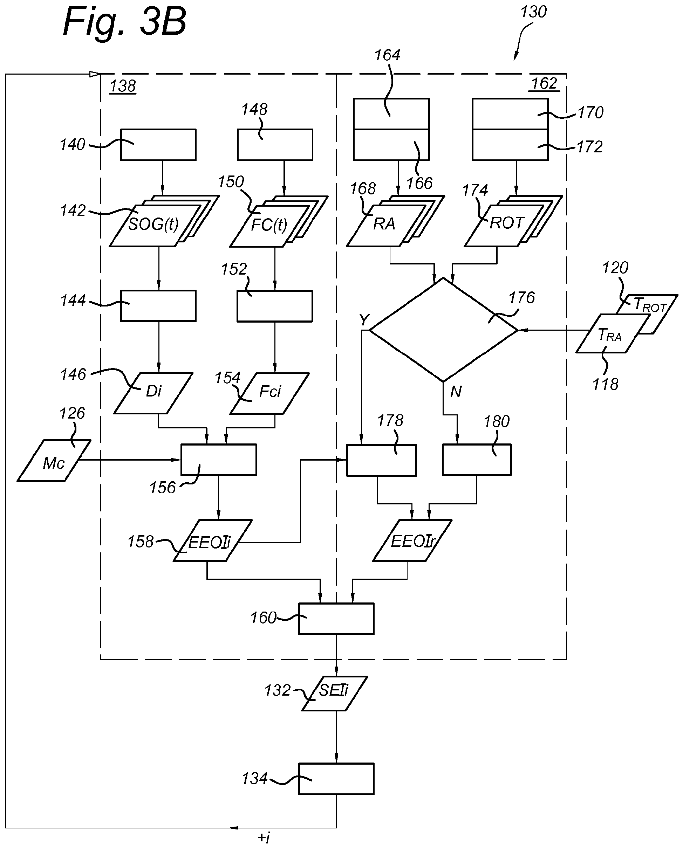

Figures 3a and 3b show flowcharts of an exemplary method 100 for dynamically calculating and real-time monitoring of a ship efficiency indication SEI. Figure 3a illustrates that the exemplary method 100 includes an initialization phase 102 and an operational phase 104.

In part 106 of the initialization phase 102, a fixed length is set for reference time intervals $\Delta t_a$ that relate to the assessment of stability of the rudder angle RA and the turning rate ROT. As discussed above, this rudder angle RA may be an average of individual rudder angles for distinct rudder blades 32. In 108, a fixed length is set for measurement time intervals $\Delta t_i$ that relate to the averaging or integrating of other measured values. The set length for $\Delta t_a$ is at least equal to but preferably larger than the set length for $\Delta t_i$. For an inland waterway vessel, the fixed length for the measurement time intervals $\Delta t_i$ may for instance be in a range of 1/10 of a second to 20 seconds.

An initial value of a reference efficiency term $EEOI_r$ is estimated in 110. This reference efficiency term $EEOI_r$ may for example be an energy efficiency operational indication, which may be based on previous efficiency determinations by this vessel or on an averaged metric for this particular type of vessel.

A first fluctuation threshold 118 for the rudder angle RA and a second fluctuation threshold 120 for the rate of turn ROT are defined in steps 114 and 116 respectively. The rudder angle RA is deemed constant if an acquired indication of rudder angle fluctuation stays below first fluctuation threshold 118 during reference time length $\Delta t_a$. Similarly, the turning rate ROT is considered constant if an acquired indication of turning rate fluctuation stays below second fluctuation threshold 120 during reference time length $\Delta t_a$.

In the exemplary method, sample averaging techniques may be employed to reduce the effects of measurement noise. During a brief sample time period in which the measurement signal is assumed to remain essentially constant, an observable Q(t) is repeatedly sampled at consecutive times $t_j$. This brief sample time period should be shorter than the set length for Ati. The resulting sample values Q are then averaged, to obtain a time averaged value <Q>, via

$$\langle Q \rangle = \frac{1}{N} \sum_{j=1}^{N} Q(t_j)$$

For instance, a set of N draught measurement samples $T(t_j)$ with j = 1, ..., N is acquired in 122, during a brief initial time period after cargo loading but prior to departure from the quay. This set of samples is averaged to obtain an average draught measurement <T> via

$$\langle T \rangle = \frac{1}{N} \sum_{j=1}^{N} T(t_j)$$

In step 124, the cargo mass percentage Mc 126 is calculated from the average draught measurement <T>, and from a known maximum draught value $T^+$ and minimum draught value $T^-$. The cargo mass percentage Mc is a dimensionless term, with a value between 0% and 100% of $T^+$. The cargo mass percentage Mc is calculated as

$$Mc = \frac{100}{T^+ - T^-} \langle T \rangle + \left( 100 - \frac{100}{T^+ - T^-} \right) T^+$$

In vessels that lack a draught or cargo mass sensing system, the cargo mass percentage may instead be entered manually, e.g. based on cargo weight data from the bill of lading.

In the operational phase 104, which is active during vessel navigation, the method 100 progresses through a sequence of operations associated with a particular measurement time interval $\Delta t_i$. This sequence includes obtaining 130 an efficiency indication $SEI_i$ corresponding to the time interval $\Delta t_i$, followed by displaying 134 of the obtained efficiency indication $SEI_i$ to an operator of the vessel 10. This sequence is repeated for consecutive time intervals $\Delta t_i$, corresponding with progressing values for running index i.

Figure 3b shows the operational phase 104 of the exemplary method 100 in more detail. The obtaining 130 of the efficiency indication $SEI_i$ corresponding to time interval $\Delta t_i$, is sub-divided into two logical sub-routines 138, 162. The first subroutine 138 is associated with measuring and averaging efficiency-related parameters during the current measurement time interval $\Delta t_i$, while the second subroutine 162 is associated with an assessment of steering stability during the current assessment time interval $\Delta t_a$.

The current measurement time interval $\Delta t_i$ is associated with time stamp $t_i$. The current measurement time interval $\Delta t_i$ starts at time $t = t_i - \Delta t_i$ and ends on $t = t_i$. The reference time interval $\Delta t_a$ relating to the second subroutine 162 is also associated with current time stamp $t_i$, but starts at time $t = t_i - \Delta t_a$ (with $\Delta t_a \geq \Delta t_i$) and ends on $t = t_i$.

Averaged <SOG> values are repeatedly determined in 140 during measurement time interval $\Delta t_i$. The averaged <SOG> values 142 are used to calculate 144 a distance $D_i$ 146 travelled by the vessel 10 in time interval $\Delta t_i$, via

$$D_i = C \cdot \sum_{k=1}^{K} \langle SOG \rangle_k \cdot \Delta t_k$$

Here, the measurement time interval $\Delta t_i$ has been subdivided into K sequential sub-periods $\Delta t_k$ (with $\Delta t_k < \Delta t_i$), and the distance $D_i$ in time interval $\Delta t_i$ is approximated here by a sum of products of averaged <SOG> values times corresponding sub-periods $\Delta t_k$. A factor C may be used to convert units of measured SOG to units of distance. C equals 1.852/3.6 when SOG is expressed in knots (nautical miles per hour), $\Delta t$ in seconds, and $D_i$ in metres.

The first subroutine 138 further includes acquiring an indication of a fuel quantity $FC_i$ consumed by the vessel 10 in the measurement time interval $\Delta t_i$. In step 148, an averaged <FC> is repeatedly determined during the measurement time interval $\Delta t_i$, from which the fuel consumption $FC_i$ 154 (in litres per hour) is calculated in 152. If the sub-periods $\Delta t_k$ are all of equal duration, then $FC_i$ may be numerically calculated via

$$FC_i = \frac{1}{K} \sum_{k=1}^{K} \langle FC \rangle_k$$

The current energy efficiency term $EEOI_i$ 158 is calculated in step 156, based on the cargo mass percentage Mc 126, as well as on the fuel consumption $FC_i$ and the distance $D_i$ travelled in the measurement time interval $\Delta t_i$, using

$$EEOI_i = \frac{FC_i}{Mc \cdot D_i}$$

The second subroutine 162 includes acquiring an indication of fluctuation of the rudder angle RA and an indication of fluctuation of the turning rate ROT during the current reference time interval $\Delta t_a$.

In step 164, the instantaneous rudder angle RA is repeatedly sampled by the rudder angle sensor 46. Similarly, the vessel turning rate ROT is repeatedly sampled by the turning rate sensor 48 in step 170. During the reference time interval $\Delta t_a$, averaged rudder angles <RA> 168 are repeatedly calculated in 166, and averaged turning rates <ROT> 174 are repeatedly calculated in 172. These averaged values <RA> and <ROT> are stored in a register.

In step 176, differential values are determined between each pair of subsequent averaged rudder angles <RA> 168, to obtain an indication of fluctuation of the rudder angle RA during the reference time interval $\Delta t_a$. Similarly, differential values are determined between each pair of subsequent averaged turning rates <ROT> 174 in step 176, to obtain an indication of fluctuation of the turning rate ROT during the reference time interval $\Delta t_a$.

These indications of fluctuations of the rudder angle RA and the ROT are compared against their respective threshold values 118, 120, to check whether the rudder angle RA and the rate of turn ROT can be considered stable during reference time interval $\Delta t_a$.

If both the fluctuations of RA and ROT remain below the predetermined threshold values, then the current efficiency term $EEOI_i$ 158 is set as the new reference efficiency term $EEOI_r$ in 178.

If at least one of the fluctuations of the rudder angle RA and the rate of turn ROT equals or exceeds its respective threshold value, then the previous reference efficiency term $EEOI_r$ is maintained in 180.

After having obtained the reference efficiency term $EEOI_r$ (via step 178 or 180) and the current efficiency term $EEOI_i$ (via step 158), the resulting ship efficiency indication $SEI_i$ for the current measurement time interval $\Delta t_i$ is calculated in 160, using

$$SEI_i = \frac{EEOI_r}{EEOI_i} \cdot 100\%$$

The efficiency indication $SEI_i$ thus provides a dimensionless metric that expresses how the current efficiency term $EEOI_i$ relates to a reference efficiency $EEOI_r$, expressed in % of the reference value. An increase in fuel consumption $FC_i$ and/or a decrease in the travelled distance $D_i$ during the current measurement time interval $\Delta t_i$ will yield and increased $EEOI_i$, and thus a lowered $SEI_i$.

In some situations, a temporal decrease in fuel consumption by the propulsion system will not lead to a proportional decrease in travelled distance, for instance when the operator suddenly throttles down. Such situations give rise to a current efficiency term $EEOI_i$ that is potentially lower than the reference efficiency term $EEOI_r$, and thus to an efficiency indication $SEI_i$ that exceeds 100%. The method may therefore include an additional step in which the current efficiency term $EEOI_i$ is first set as the new reference efficiency term $EEOI_r$ in the case that $EEOI_i < EEOI_r$, in order to reset the current $SEI_i$ to 100%.

However, by first assessing whether the rudder angle RA and the rate of turn ROT are considered stable during at least time interval $\Delta t_i$, and then assigning the current term $EEOI_i$ to the reference term $EEOI_r$ if this condition is met, the system is able to reset the efficiency indication SEI to 100% when RA and ROT are deemed sufficiently stable. Subsequent SEI calculations 160 will thereafter be compared to this updated reference state, also if this reference state corresponds to a stable turning motion of the vessel.

The calculated ship efficiency indication $SEI_i$ is then displayed together with the average fuel consumption $FC_i$ and the speed over ground SOG to an operator at the bridge, using the display device 80. This allows a vessel operator to obtain intuitive information of fuel/steering efficiency that also takes the effect of steering stability into account.

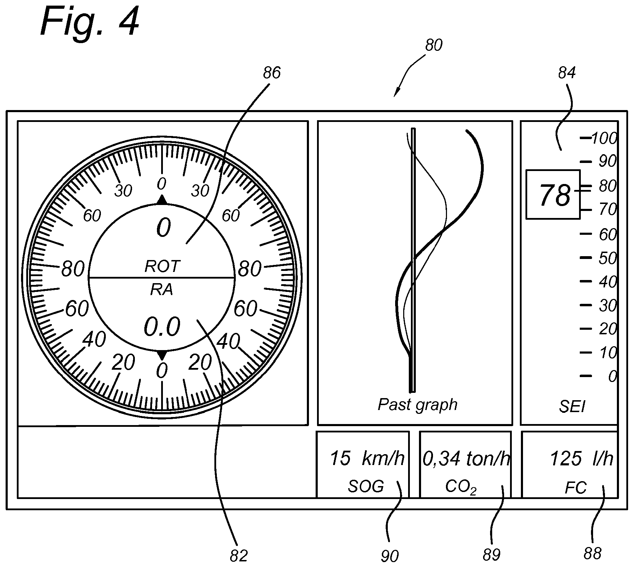

Figure 4 shows a graphical user interface that may be displayed by the display device 80 of the monitoring system 40. This display device 80 is provided at a bridge of the vessel 10, and is configured to dynamically display the ship efficiency indication $SEI_i$ to a human operator on the bridge. This indication helps to increase the operator's awareness of the impact of fluctuations in rudder angle RA and/or vessel turning rate ROT on the energy efficiency, and allows the operator to optimize control of the rudder angle RA to improve this efficiency.

The display device 80 in figure 4 is provided with a plurality of visual indicators 82, 84, 86, 88, 90 in a single screen, e.g. an LED image display. The first indicator 82 provides a graphical representation of the current rudder angle <RA>, as well as the deflection from the zero equilibrium value (all expressed in degrees °). The current rudder angle <RA> may have been averaged over synchronous measurements from distinct rudder angle sensors 46a-b. By inspecting the first indicator 82, the operator can directly observe the effect of rudder angle settings that may degrade fuel efficiency performance. Adjustment of set rudder angle will result in a gradual change in the measured rudder angle <RA>, which will be directly shown by the first indicator 82.

The second indicator 84 presents a dynamic representation of the current $SEI_i$, as compared to the reference SEI that is associated with optimal efficiency expected under the present navigation conditions. The SEI is a dimensionless unit.

The third indicator 86 presents a current value for the rate of turn <ROT>.

The fourth indicator 88 dynamically depicts a current fuel consumption rate <FC>, which may have been averaged over measurements from multiple fuel consumption sensors 42a-b. Here, <FC> is expressed in litres of fuel used per hour (l/h). A fifth indicator 89 may dynamically reflect a current $CO_2$ emission rate (expressed in tons per hour, t/h), which is directly related to the current fuel consumption rate <FC>.

The sixth indicator 90 presents a dynamic representation for the measured speed over ground <SOG>. Here, the speed over ground is expressed in kilometres per hour (km/h). In other applications e.g. for sea-going vessels, SOG may be expressed in nautical miles per hour (NM/h).

Prompt display of an indication of current ship efficiency indicator $SEI_i$ in response to an initial steering adjustment allows the vessel operator to quickly fine-tune the steering settings, which may reduce the number and magnitude of steering motions as well as the resulting wear of the steering mechanism and the consumption of fuel.

In addition, any or all of the current and past calculated values for SEI, and for RA, ROT, FC, etc. may be stored in data memory 72. Such values may be averaged per trip, to form a history of efficiency metrics for this vessel 10. Such a trip history may be retrieved and presented on the display device 80 on request, to allow the vessel operator to compare efficiency metrics for the current trip with those of past trips, and to detect trends and increase overall vessel efficiency awareness.

The described embodiments are to be considered in all respects only as illustrative and not restrictive. The scope of the invention is, therefore, indicated by the appended claims rather than by the foregoing description.

For instance, in alternative method embodiments, only measured or averaged values for the rudder angle and corresponding indications of rudder angle fluctuations may be taken into account in the calculation of the efficiency indication. In such cases, only a comparison of rudder angle fluctuations against a first threshold value may be a sufficient condition for adjusting the efficiency indication to an improved value.

The operator of a vessel may have a choice between manual steering control mode and autopilot control mode. In the autopilot mode, the autopilot monitors a deviation of an actual heading of the vessel with respect to a set course, and adapts the rudder angle RA accordingly. The human operator may monitor the autopilot response, and adjust the set a different heading if necessary.

The proposed efficiency monitoring system is to be installed on a vessel, for instance as part of the vessel 10 in figure 1. It should, however, be understood that the monitoring system may be implemented in various other vessels. Those skilled in the art and informed by the teachings herein will realize that the proposed monitoring system can be implemented also as a retrofit for an existing vessel. The efficiency monitoring system may be connectable to an existing monitoring system of the vessel. Any or all of the sensors that form part or interact with the efficiency monitoring system may already be present on the vessel as part of the existing monitoring system. For example, continuous or intermittent measurement of rudder angles may be obtained from rudder angle sensors that are part of the vessel's auto pilot system.

The efficiency monitoring system may comprise or be connectable to a wireless data transmission device (e.g. a WiFi modem or 3G/4G based communication device), which is configured to transmit a selection of acquired and/or calculated data to a remote display device (e.g. a smart phone, tablet, pc, etc.), to allow monitoring of vessel efficiency from other locations.

Also, it will be appreciated that the present invention need not be limited to a monitoring system for displaying assistive information as a visual aid to the vessel operator. Alternatively or in addition, the system may be used for directly controlling the settings of the vessel.

Although the exemplary embodiment in the detailed description related to a cargo ship for inland waterway navigation, the principles of the efficiency indicator system described herein and defined in the claims also pertain to other types of vessels, like pushing tugs, or sea-going vessels (e.g. short sea boats and ships).

Vessels may generally be provided with at least one rudder blade and propeller, but also with rudder system configurations having two or more rudder blades and/or with propulsion system configurations having two or more propellers. Such multi-rudder systems and/or multi-propulsion systems may be laterally spaced across the vessel hull (e.g. at the stern) at lateral mutual distances, preferably in an athwart symmetrical arrangement. The distinct rudder blades may be independently pivotable, and the respective instant rudder angles RA may be measured separately and directly averaged by the efficiency indicator system.

The monitoring system may comprise one or more propeller rotation rate sensors. In cases wherein the propulsion system of the vessel includes multiple propellers, the monitoring system may comprise further propeller rotation rate sensors for each propeller. This allows measurement of instantaneous propeller rotation rates for each propeller.

Alternatively or in addition, other parameters can be monitored simultaneously, for example parameters of an external type like the temperature and currents in the surrounding water, weather, etc.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, and algorithm steps described in connection with the embodiments disclosed herein may be implemented as electronic hardware, computer software, or combinations of both. Various illustrative components, blocks, modules, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Algorithm steps described in connection with the method embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor.

## List of Reference Symbols

| | |
|---|---|
| 10 | vessel (e.g. boat, ship) |
| 12 | hull |
| 14 | bow |
| 16 | stern |
| 18 | keel |
| 20 | propulsion system (e.g. propeller assembly) |
| 22 | propeller |
| 24 | nozzle |
| 26 | propeller shaft |
| 30 | rudder system |
| 32 | rudder blade |
| 34 | rudderstock |
| 36 | steering actuator |
| 40 | efficiency monitoring system |
| 42 | first sensor (e.g. fuel consumption rate sensor) |
| 44 | second sensor (e.g. GNSS positioning device) |
| 46 | third sensor (e.g. rudder angle sensor) |
| 48 | fourth sensor (e.g. turning rate sensor) |
| 52 | first sub-system |
| 54 | second sub-system |
| 56 | third sub-system |
| 60 | data bus |
| 62 | first connector/adapter |
| 64 | second connector/adapter |
| 66 | third connector/adapter |
| 70 | processor device (e.g. CPU) |
| 72 | data memory (e.g. hard disk) |
| 74 | communication link |
| 76 | further communication link |
| 80 | display device (e.g. operator display) |
| 82 | first indicator (e.g. RA indicator) |
| 84 | second indicator (e.g. SEI) |
| 86 | third indicator (e.g. ROT indicator) |
| 88 | fourth indicator (e.g. FC indicator) |
| 89 | fifth indicator (e.g. $CO_2$ indicator) |

| | |
|---|---|
| 90 | sixth indicator (e.g. SOG indicator) |
| 100 | monitoring method |
| 102 | initialization phase |
| 104 | operational phase |
| 106 | set reference time interval length |
| 108 | set measurement time interval length |
| 110 | estimate initial reference energy term $EEOI_r$ |
| 112 | $EEOI_r$ |
| 114 | define first fluctuation threshold (e.g. RA threshold) |
| 116 | define second fluctuation threshold (e.g. ROT threshold) |
| 118 | first fluctuation threshold Tra |
| 120 | second fluctuation threshold Trot |
| 122 | acquire draught measurements |
| 124 | calculate cargo mass percentage |
| 126 | cargo mass percentage Mc |
| 130 | obtain efficiency indication |
| 132 | (current/recent) efficiency indication $SEI_i$ |
| 134 | display efficiency indication |
| 138 | first subroutine |
| 140 | acquire (averaged) SOG values |
| 142 | (averaged) SOG values |
| 144 | calculate travelled distance |
| 146 | travelled distance $D_i$ |
| 148 | acquire (averaged) FC values |
| 150 | (averaged) FC values |
| 152 | calculate fuel consumption |
| 154 | fuel consumption $FC_i$ |
| 156 | calculate current efficiency term |
| 158 | current efficiency term $EEOI_i$ |
| 160 | determine current $SEI_i$ |
| 162 | second subroutine |
| 164 | acquire rudder angle measurements |
| 166 | average measurements |
| 168 | (averaged) RA values |
| 170 | acquire turning rate measurements |
| 172 | average measurements |
| 174 | (averaged) ROT values |
| 176 | compare differential RA and ROT values with threshold values |
| 178 | set new reference efficiency term |
| 180 | maintain previous reference efficiency term |
| Ar | rudder axis |
| Ap | propeller axis |
| X | longitudinal direction (alongship direction; forward/aft directions $\pm X$) |
| Y | transversal direction (athwart direction; aport/astarboard directions $\pm Y$) |
| Z | vertical direction |
| $\alpha$ | turning angle |
| RA | rudder angle |
| SEI | ship efficiency indicator |
| $FC_i$ | fuel consumption |
| ROT | vessel turning rate |
| SOG | speed over ground |
| D | travelled distance |
| T | measured draught sample |

| | |
|---|---|
| $T^-$ | minimum draught value |
| $T^+$ | maximum draught value |
| Mc | cargo mass percentage |
| $t_i$ | current time stamp |
| $\Delta t_a$ | reference time interval |
| $\Delta t_i$ | measurement time interval |
| $EEOI_r$ | reference efficiency term (e.g. reference energy efficiency operational indicator) |
| $EEOI_i$ | current efficiency term (e.g. current energy efficiency operational indicator) |

**Claims**

1. A method (100) for monitoring an efficiency of a vessel (10) during waterway navigation, the method comprising:

   - initially determining (110) a reference efficiency term ($EEOI_r$);
   - obtaining (130) an efficiency indication ($SEI_i$) corresponding to a time interval ($\Delta t_i$) including:

      - acquiring (148-152) an indication of a fuel consumption ($FC_i$) by the vessel in the time interval;
      - acquiring (140-144) an indication of a distance ($D_i$) travelled by the vessel in the time interval;
      - calculating (156) a current efficiency term ($EEOI_i$) based on the indications of the fuel consumption ($FC_i$) and the distance ($D_i$) acquired for the time interval ($\Delta t_i$);
      - acquiring an indication (164-168) of fluctuation of a rudder angle (RA) during at least the time interval;
      - comparing the indication of fluctuation of the rudder angle (RA) against a first threshold value (118);
      - maintaining the reference efficiency term ($EEOI_r$), if the indication of fluctuation of the rudder angle (RA) equals or exceeds the first threshold value;
      - overwriting the reference efficiency term with the current efficiency term ($EEOI_i$), if the indication of fluctuation of the rudder angle (RA) remains below the first threshold value (118), and
      - calculating (160) the efficiency indication ($SEI_i$) including determining a ratio between the reference efficiency term ($EEOI_r$) and the current efficiency term ($EEOI_i$);

   wherein the method further comprises:
   - providing (134) the efficiency indication to a display device (80).

2. The method according to claim 1, wherein obtaining (130) the efficiency indication ($SEI_i$) further includes acquiring (170-174) an indication of fluctuation of a rate of turn (ROT) of the vessel (10) during at least the time interval ($\Delta t_i$); and wherein calculating (160) the efficiency indication is further based on the indication of fluctuation of the rate of turn.

3. The method according to claim 2, wherein calculating (160) the efficiency indication ($SEI_i$) further includes:

   - comparing (176) the indication of fluctuation of the rate of turn (ROT) against a second threshold value (120);
   - maintaining (180) the reference efficiency term ($EEI_r$), if at least one of the indications of fluctuations of the rudder angle (RA) and the rate of turn (ROT) equals or exceeds its respective first or second threshold value (118, 120), and
   - overwriting (178) the reference efficiency term with the current efficiency term ($EEOI_i$), only if both the indications of fluctuations of the rudder angle (RA) and the rate of turn (ROT) remain below the respective first and second threshold values (118, 120).

4. The method according to any one of claims 1 - 3, wherein acquiring (140-144) the indication of the distance ($D_i$) travelled by the vessel (10) in the time interval ($\Delta t_i$) comprises:

   - acquiring (140) consecutive measurements of a speed over ground (SOG) of a hull (12) of the vessel (10) with respect to ground (102) during the time interval;
   - integrating (144) the measurements of the speed over ground to calculate the distance travelled by the vessel in the time interval.

5. The method according to any one of claims 1 - 4, further comprising:

   - measuring (122) an indication of draught (DS) of the vessel (10);
   - calculating (124) a cargo mass percentage (Mc) from the indication of draught.

6. The method according to any one of claims 1 - 5, further comprising:

   - displaying (134) at least the efficiency indication ($SEI_i$) at a bridge of the vessel (10).

7. A system (40) for monitoring an efficiency of a vessel (10) during waterway navigation, the system comprising a sensor arrangement (42, 44, 46, 48) and a processor device (70) which are jointly configured to execute the method in accordance with any one of claims 1 - 6, wherein the sensor arrangement comprises:

- a first sensor (42) configured to measure the fuel consumption rate (FCR) of a propulsion system (20) of the vessel, to acquire the indication of the fuel consumption ($FC_i$) by the vessel in a time interval ($\Delta t_i$);
- a second sensor (44) configured to measure the speed (SOG) of the vessel, to acquire the indication of the distance ($D_i$) travelled by the vessel in the time interval;
- a third sensor (46) configured to measure a pivot angle of a rudder blade (32) relative to a hull (12) of the vessel (10), to acquire the indication of fluctuation of the rudder angle (RA) during at least the time interval;

and wherein the processor device (70) is configured to:

- initially determine (110) a reference efficiency term ($EEOI_r$);
- obtain (130) an efficiency indication ($SEI_i$) corresponding to the time interval ($\Delta t_i$) including:

  - calculating (156) a current efficiency term ($EEOI_i$) based on the indications of the fuel consumption ($FC_i$) and the distance ($D_i$) acquired for the time interval ($\Delta t_i$);
  - comparing the indication of fluctuation of the rudder angle (RA) against the first threshold value (118);
  - maintaining the reference efficiency term ($EEOI_r$), if the indication of fluctuation of the rudder angle (RA) equals or exceeds the first threshold value;
  - overwriting the reference efficiency term with the current efficiency term ($EEOI_i$), if the indication of fluctuation of the rudder angle (RA) remains below the first threshold value (118), and
  - calculating the efficiency indication ($SEI_i$) corresponding to the time interval, including determining a ratio between the reference efficiency term ($EEOI_r$) and the current efficiency term ($EEOI_i$);

and wherein the system (40) further comprises a display device (80), configured to dynamically display the efficiency indication ($SEI_i$) corresponding to the time interval ($\Delta t_i$) to a vessel operator.

8. The system (40) according to claim 7, comprising:

- a fourth sensor (48) configured to measure a rate of turn (ROT) of the hull (12) of the vessel (10), to acquire an indication of fluctuation of a rate of turn during at least the time interval ($\Delta t_i$).

9. A marine vessel (10) comprising a system (40) in accordance with any one of claims 7 - 8.

10. A computer program product configured to provide instructions to carry out a method according to any one of claims 1 - 6, when loaded on a computer device (70).

11. A computer readable medium, comprising a computer program product according to claim 10.

**Patentansprüche**

1. Verfahren (100) zum Überwachen der Leistung eines Schiffs (10) während einer Wasserwegnavigation, wobei das Verfahren die folgenden Schritte umfasst:

- Bestimmen (110) eines Referenzeffizienzterms ($EEOI_r$) zu Beginn;
- Erhalten (130) einer Effizienzangabe ($SEI_i$) entsprechend einem Zeitintervall ($\Delta t_i$), wobei das Erhalten die folgenden Schritte umfasst:

  - Erfassen (148-152) einer Angabe eines Treibstoffverbrauchs ($FC_i$) von dem Schiff in diesem Zeitintervall;
  - Erfassen (140-144) einer Angabe einer Strecke ($D_i$), die von dem Schiff in diesem Zeitintervall zurückgelegt wurde;
  - Berechnen (156) eines aktuellen Effizienzterms ($EEOI_i$) auf der Basis der Angaben des Treibstoffverbrauchs ($FC_i$) und der Strecke ($D_i$), die für das Zeitintervall ($\Delta t_i$) erfasst wurden;
  - Erfassen einer Angabe (164-168) einer Schwankung einer Ruderlage (RA) wenigstens während des Zeitintervalls;
  - Vergleichen der Angabe der Schwankung der Ruderlage (RA) mit einem ersten Schwellenwert (118);
  - Beibehalten des Referenz-Effizienzterms ($EEOI_r$), falls die Angabe einer Schwankung der Ruderlage (RA) gleich dem ersten Schwellenwert ist oder diesen überschreitet;
  - Überschreiben des Referenz-Effizienzterms mit dem aktuellen Effizienzterm ($EEOI_i$), falls die Angabe einer Schwankung der Ruderlage (RA) unter dem ersten Schwellenwert (118) bleibt, und
  - Berechnen (160) der Effizienzangabe ($SEI_i$), das das Bestimmen eines Verhältnisses zwischen dem Referenz-Effizienz-

term (EEOI$_r$) und dem aktuellen Effizienzterm (EEOI$_i$) umfasst,
wobei das Verfahren ferner den folgenden Schritt umfasst:

- Bereitstellen (134) der Effizienzangabe auf einer Anzeigevorrichtung (80).

2. Verfahren nach Anspruch 1, wobei das Erhalten (130) der Effizienzangabe (SEI$_i$) ferner das Erfassen (170-174) einer Angabe einer Schwankung einer Drehgeschwindigkeit (ROT) des Schiffs (10) wenigstens während des Zeitintervalls ($\Delta t_i$) umfasst; und wobei das Berechnen (160) der Effizienzangabe ferner auf der Angabe einer Schwankung der Drehgeschwindigkeit beruht.

3. Verfahren nach Anspruch 2, wobei die Berechnung (160) der Effizienzangabe (SEI$_i$) ferner die folgenden Schritte umfasst:

- Vergleichen (176) der Angabe einer Schwankung der Drehgeschwindigkeit (ROT) mit einem zweiten Schwellenwert (120);
- Beibehalten (180) des Referenz-Effizienzterms (EEOI$_r$), falls wenigstens eine der Angaben der Schwankung der Ruderlage (RA) und der Drehgeschwindigkeit (ROT) jeweils dem ersten oder zweiten Schwellenwert (118, 120) gleicht oder diesen überschreitet, und
- Überschreiben (178) des Referenz-Effizienzterms mit dem aktuellen Effizienzterm (EEOI$_i$) nur dann, wenn beide Angaben der Schwankungen der Ruderlage (RA) und der Drehgeschwindigkeit (ROT) unter dem jeweiligen ersten bzw. zweiten Schwellenwert (118, 120) bleiben.

4. Verfahren nach einem der Ansprüche 1-3, wobei die Erfassung (140-144) der Angabe der Strecke (D$_i$), die von dem Schiff (10) im Zeitintervall ($\Delta t_i$) zurückgelegt wurde, die folgenden Schritte umfasst:

- Erfassen (140) von aufeinanderfolgenden Messungen einer Geschwindigkeit über Grund (SOG) eines Rumpfes (12) des Schiffs (10) in Bezug auf den Grund (102) während des Zeitintervalls;
- Integrieren (144) der Messungen der Geschwindigkeit über Grund, um die Strecke zu berechnen, die von dem Schiff in diesem Zeitintervall zurückgelegt wurde.

5. Verfahren nach einem der Ansprüche 1-4, das ferner die folgenden Schritte umfasst:

- Messen (122) einer Angabe eines Tiefgangs (DS) des Schiffs (10);
- Berechnen (124) eines Frachtmasse-Prozentsatzes (Mc) aus der Angabe des Tiefgangs.

6. Verfahren nach einem der Ansprüche 1-5, das ferner den folgenden Schritt umfasst:

- Anzeigen (134) wenigstens der Effizienzangabe (SEI$_i$) auf einer Brücke des Schiffs (10).

7. System (40) zum Überwachen der Leistung eines Schiffs (10) während einer Wasserwegnavigation, wobei das System eine Sensoranordnung (42, 44, 46, 48) und eine Prozessorvorrichtung (70) umfasst, die zusammen konfiguriert sind, das Verfahren nach einem der Ansprüche 1-6 auszuführen, wobei die Sensoranordnung Folgendes umfasst:

- einen ersten Sensor (42), der konfiguriert ist, die Treibstoffverbrauchsrate (FCR) eines Antriebssystems (20) des Schiffs zu messen, um die Angabe des Treibstoffverbrauchs (FCi) von dem Schiff in einem Zeitintervall ($\Delta t_i$) zu erfassen;
- einen zweiten Sensor (44), der konfiguriert ist, die Geschwindigkeit (SOG) des Schiffs zu messen, um die Angabe der Strecke (Di), die von dem Schiff in diesem Zeitintervall zurückgelegt wurde, zu erfassen;
- einen dritten Sensor (46), der konfiguriert ist, einen Schwenkwinkel eines Ruderblatts (32) in Bezug auf einen Rumpf (12) des Schiffs (10) zu messen, um die Angabe einer Schwankung der Ruderlage (RA) während wenigstens des Zeitintervalls zu erfassen;

und wobei die Prozessorvorrichtung (70) konfiguriert ist, die folgenden Schritte auszuführen:

- Bestimmen (110) eines Referenzeffizienzterms (EEOIr) zu Beginn;
- Erhalten (130) einer Effizienzangabe (SEI$_i$) entsprechend dem Zeitintervall ($\Delta t_i$), wobei das Erhalten die folgenden Schritte umfasst:

- Berechnen (156) eines aktuellen Effizienzterms (EEOI$_i$) auf der Basis der Angaben des Treibstoffverbrauchs (FC$_i$) und der Strecke (D$_i$), die für das Zeitintervall ($\Delta t_i$) erfasst wurden;
- Vergleichen der Angabe der Schwankung der Ruderlage (RA) mit dem ersten Schwellenwert (118);
- Beibehalten des Referenz-Effizienzterms (EEOI$_r$), falls die Angabe einer Schwankung der Ruderlage (RA) gleich dem ersten Schwellenwert ist oder diesen überschreitet;
- Überschreiben des Referenz-Effizienzterms mit dem aktuellen Effizienzterm (EE-

OI$_i$), falls die Angabe einer Schwankung der Ruderlage (RA) unter dem ersten Schwellenwert (118) bleibt, und
- Berechnen der Effizienzangabe (SEI$_i$) entsprechend dem Zeitintervall, das das Bestimmen eines Verhältnisses zwischen dem Referenz-Effizienzterm (EEOI$_r$) und dem aktuellen Effizienzterm (EEOI$_i$) umfasst,
wobei das System (40) ferner eine Anzeigevorrichtung (80) umfasst, die konfiguriert ist, die Effizienzangabe (SE$_i$) entsprechend dem Zeitintervall ($\Delta t_i$) für einen Kapitän des Schiffs dynamisch anzuzeigen.

8. System (40) nach Anspruch 7, das ferner Folgendes umfasst:

- einen vierten Sensor (48), der konfiguriert ist, eine Drehgeschwindigkeit (ROT) des Rumpfes (12) des Schiffs (10) zu messen, um eine Angabe einer Schwankung einer Drehgeschwindigkeit wenigstens während des Zeitintervalls ($\Delta t_i$) zu erfassen.

9. Seeschiff (10), das ein System (40) nach einem der Ansprüche 7-8 umfasst.

10. Computerprogrammprodukt, das konfiguriert ist, Anweisung bereitzustellen, um ein Verfahren nach einem der Ansprüche 1-6 bereitzustellen, wenn es in eine Computervorrichtung (70) geladen ist.

11. Computerlesbares Medium, das ein Computerprogrammprodukt nach Anspruch 10 umfasst.

## Revendications

1. Procédé (100) pour surveiller une efficacité d'un navire (10) pendant la navigation fluviale, le procédé comprenant les étapes consistant à :

- déterminer initialement (110) un terme d'efficacité de référence (EEOI$_r$) ;
- obtenir (130) une indication d'efficacité (SEI$_i$) correspondant à un intervalle de temps ($\Delta t_i$), incluant les étapes consistant à :

- acquérir (148-152) une indication d'une consommation de carburant (FC$_i$) par le navire dans l'intervalle de temps ;
- acquérir (140-144) une indication d'une distance (D$_i$) parcourue par le navire dans l'intervalle de temps ;
- calculer (156) un terme d'efficacité actuel (EEOI$_i$) sur la base des indications de la consommation de carburant (FC$_i$) et de la distance (D$_i$) acquises pour l'intervalle de temps ($\Delta t_i$) ;
- acquérir une indication (164-168) de fluctuation d'un angle de gouvernail (RA) pendant au moins l'intervalle de temps ;
- comparer l'indication de fluctuation de l'angle de gouvernail (RA) à une première valeur de seuil (118) ;
- maintenir le terme d'efficacité de référence (EEOI$_r$), si l'indication de fluctuation de l'angle de gouvernail (RA) est égale ou supérieure à la première valeur de seuil ;
- écraser le terme d'efficacité de référence avec le terme d'efficacité actuel (EEOI$_i$), si l'indication de fluctuation de l'angle de gouvernail (RA) reste inférieure à la première valeur de seuil (118), et
- calculer (160) l'indication d'efficacité (SEI$_i$), y compris déterminer un rapport entre le terme d'efficacité de référence (EEOI$_r$) et le terme d'efficacité actuel (EEOI$_i$) ; dans lequel le procédé comprend en outre l'étape consistant à :
- fournir (134) l'indication d'efficacité à un dispositif d'affichage (80).

2. Procédé selon la revendication 1, dans lequel l'obtention (130) de l'indication d'efficacité (SEI$_i$) inclut en outre l'acquisition (170-174) d'une indication de fluctuation d'une vitesse de changement de direction (ROT) du navire (10) pendant au moins l'intervalle de temps ($\Delta t_i$) ;
et dans lequel le calcul (160) de l'indication d'efficacité est en outre basé sur l'indication de fluctuation de la vitesse de changement de direction.

3. Procédé selon la revendication 2, dans lequel le calcul (160) de l'indication d'efficacité (SEI$_i$) inclut en outre les étapes consistant à :

- comparer (176) l'indication de fluctuation de la vitesse de changement de direction (ROT) à une seconde valeur de seuil (120) ;
- maintenir (180) le terme d'efficacité de référence (EEOI$_r$), si au moins l'une des indications de fluctuations de l'angle de gouvernail (RA) et de la vitesse de changement de direction (ROT) est égale ou supérieure à sa première ou seconde valeur de seuil respective (118, 120), et
- écraser (178) le terme d'efficacité de référence avec le terme d'efficacité actuel (EEOI$_i$), uniquement si à la fois les indications de fluctuations de l'angle de gouvernail (RA) et de la vitesse de changement de direction (ROT) restent inférieures aux première et seconde valeurs de seuil respectives (118, 120).

4. Procédé selon l'une quelconque des revendications 1 à 3, dans lequel l'acquisition (140-144) de l'indication de la distance (Di) parcourue par le navire (10) dans l'intervalle de temps ($\Delta t_i$) comprend les étapes consistant à :

- acquérir (140) des mesures consécutives d'une vitesse (SOG) par rapport au fond de l'eau d'une coque (12) du navire (10) par rapport au fond de l'eau (102) pendant l'intervalle de temps ;
- intégrer (144) les mesures de la vitesse par rapport au fond de l'eau pour calculer la distance parcourue par le navire dans l'intervalle de temps.

5.  Procédé selon l'une quelconque des revendications 1 à 4, comprenant en outre les étapes consistant à :

- mesurer (122) une indication de traction (DS) du navire (10) ;
- calculer (124) un pourcentage de masse de cargaison (Mc) à partir de l'indication de traction.

6.  Procédé selon l'une quelconque des revendications 1 à 5, comprenant en outre l'étape consistant à :

- afficher (134) au moins l'indication d'efficacité ($SEI_i$) au niveau d'un pont du navire (10).

7.  Système (40) pour surveiller une efficacité d'un navire (10) pendant une navigation fluviale, le système comprenant un agencement de capteurs (42, 44, 46, 48) et un dispositif de processeur (70) qui sont configurés conjointement pour exécuter le procédé selon l'une quelconque des revendications 1 à 6, dans lequel l'agencement de capteurs comprend :

- un premier capteur (42) configuré pour mesurer le taux de consommation de carburant (FCR) d'un système de propulsion (20) du navire, afin d'acquérir l'indication de la consommation de carburant ($FC_i$) par le navire dans un intervalle de temps ($\Delta t_i$) ;
- un deuxième capteur (44) configuré pour mesurer la vitesse (SOG) du navire, pour acquérir l'indication de la distance ($D_i$) parcourue par le navire dans l'intervalle de temps ;
- un troisième capteur (46) configuré pour mesurer un angle de pivotement d'une pale de gouvernail (32) par rapport à une coque (12) du navire (10), afin d'acquérir l'indication de fluctuation de l'angle de gouvernail (RA) pendant au moins l'intervalle de temps ;

et dans lequel le dispositif de processeur (70) est configuré pour :

- déterminer initialement (110) un terme d'effi-

cacité de référence ($EEOI_r$) ;
- obtenir (130) une indication d'efficacité ($SEI_i$) correspondant à l'intervalle de temps ($\Delta t_i$), y compris :

- calculer (156) un terme d'efficacité actuel ($EEOI_i$) sur la base de indications de la consommation de carburant ($FC_i$) et de la distance ($D_i$) acquises pour l'intervalle de temps ($\Delta t_i$) ;
- comparer l'indication de fluctuation de l'angle de gouvernail (RA) à la première valeur de seuil (118) ;
- maintenir le terme d'efficacité de référence ($EEOI_r$), si l'indication de fluctuation de l'angle de gouvernail (RA) est égale ou supérieure à la première valeur de seuil ;
- écraser le terme d'efficacité de référence avec le terme d'efficacité actuel ($EEOI_i$), si l'indication de fluctuation de l'angle de gouvernail (RA) reste inférieure à la première valeur de seuil (118), et
- calculer l'indication d'efficacité ($SEI_i$) correspondant à l'intervalle de temps, y compris déterminer un rapport entre le terme d'efficacité de référence ($EEOI_r$) et le terme d'efficacité actuel ($EEOI_i$) ;

et dans lequel le système (40) comprend en outre un dispositif d'affichage (80), configuré pour afficher de manière dynamique l'indication d'efficacité ($SEI_i$) correspondant à l'intervalle de temps ($\Delta t_i$) à un opérateur de navire.

8.  Système (40) selon la revendication 7, comprenant :

- un quatrième capteur (48) configuré pour mesurer une vitesse de changement de direction (ROT) de la coque (12) du navire (10), afin d'acquérir une indication de fluctuation d'une vitesse de changement de direction pendant au moins l'intervalle de temps (31).

9.  Navire marin (10) comprenant un système (40) selon l'une quelconque des revendications 7 à 8.

10. Produit de programme informatique configuré pour fournir des instructions pour exécuter un procédé selon l'une quelconque des revendications 1 à 6, lorsqu'il est chargé sur un dispositif informatique (70).

11. Support lisible par ordinateur, comprenant un produit de programme informatique selon la revendication 10.

*Fig. 1A*

*Fig. 1B*

EP 3 389 021 B1

# Fig. 2

# Fig. 3A

Fig. 3B

EP 3 389 021 B1

Fig. 3B

# Fig. 4

Past graph

SEI

ROT
RA

0

0.0

30  0  30
60      60
80      80
60      60
40      40
20  0  20

78

—100
— 90
— 80
— 70
— 60
— 50
— 40
— 30
— 20
— 10
— 0

15 km/h
SOG

0,34 ton/h
CO₂

125 l/h
FC

**EP 3 389 021 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4129087 A
- WO 2010031399 A1
- EP 2993116 A1
- KR 20160065229 A
- WO 2016110693 A1